# EUROPEAN PATENT APPLICATION

(11) **EP 4 254 186 A1**
(43) Date of publication of application: **04.10.2023**
(21) Application number: 23165009.4
(22) Date of filing: 29.03.2023
(51) Int. Cl.: G06F 9/48

(54) **PROBABILISTICALLY PRIORITIZED PROCESSING QUEUE**

(30) Priority: 01.04.2022 US 202263362377 P; 13.04.2022 US 202263362943 P; 24.03.2023 US 202318125999
(71) Applicant: Palantir Technologies Inc., Denver, CO 80202 (US)
(72) Inventor: KRIEGER, Brandon, Denver, 80202 (US); VOGELBACHER, David, Denver, 80202 (US); MECOCCI, Guilio, Denver, 80202 (US); LYNCH, Matthew, Denver, 80202 (US); PRETTEJOHN, Nicolas, Denver, 80202 (US); HEGSTROM, Eric, Denver, 80202 (US); LARSEN, Peter, Denver, 80202 (US); STOLL, Sam, Denver, 80202 (US)
(74) Representative: Sayer, Robert David

(57) **Abstract**

A system and methods for queuing processing jobs. The system is configured to receive a processing job associated with a user; score the processing job; apply one or more bounds; add the processing job to a queue; order the queue based on scores of processing jobs in the queue; and sample processing jobs from the queue for dispatch for processing. Sampling the jobs from the queues can comprise updating scores, updating application of bounds, and updating ordering of the queue; reading a batch of processing jobs from a top of the queue; attempting to dispatch the processing jobs of the batch for processing; removing from the queue any dispatched processing jobs; increasing the batch size by a constant factor; determining whether a maximum batch size is reached, or all processing jobs in the queue were in the batch.

## Description

### CROSS-REFERENCE TO RELATED APPLICATIONS

This application claims benefit of U.S. Provisional Patent Application No. 63/362377, filed April 1, 2022, and titled "PROBABILISTICALLY PRIORITIZED PROCESSING QUEUE WITH PER-USER LIMITS", and U.S. Provisional Patent Application No. 63/362943, filed April 13, 2022, and titled "PROBABILISTICALLY PRIORITIZED PROCESSING QUEUE." The entire disclosure of each of the above items is hereby made part of this specification as if set forth fully herein and incorporated by reference for all purposes, for all that it contains.

Any and all applications for which a foreign or domestic priority claim is identified in the Application Data Sheet as filed with the present application are hereby incorporated by reference under 37 CFR 1.57 for all purposes and for all that they contain.

This application relates to U.S. Patent Application No. 16/175371, filed October 30, 2018, and titled "INTELLIGENT COMPUTE REQUEST SCORING AND ROUTING." The entire disclosure of each of the above items is hereby made part of this specification as if set forth fully herein and incorporated by reference for all purposes, for all that it contains.

### TECHNICAL FIELD

The present disclosure relates to systems and methods for queueing processing jobs. Example embodiments may also relate to systems and method for performing compute requests on a number of resources and techniques for scoring and probabilistically prioritizing a queue of compute requests for routing the compute requests to computing resources for, for example, load balancing purposes.

### BACKGROUND

A background is provided for introductory purposes and to aid the reader in understanding the detailed description. The background should not be taken as an admission of any prior art to the claims.

Large scale, multicomputer datacenters host large quantities of data. In response to user queries and/or other inputs to manipulate the large quantities of data (e.g., via a data analysis software application), the datacenter may distribute a "compute request" (also referred to herein as a "processing job", and/or the like) to one of a number of compute resources (also referred to herein as "computer resources", "computation resources", "computation modules", and/or the like) which may be part of a computation resource system (also referred to herein as a "backend server cluster", "compute cluster", and/or the like), the compute request comprising a communication from the datacenter for a particular compute resource to perform one or more data processing tasks. Multi-computer data centers rely on load balancers to route queries and distribute load across available computer resources of a computation resource system.

### SUMMARY

The matter for which protection is sought is defined by the claims. The systems, methods, and devices described herein each have several aspects, no single one of which is solely responsible for its desirable attributes. Without limiting the scope of this disclosure, several non-limiting features will now be described briefly.

A common feature of the architecture of data analysis applications that may produce processing jobs is that users, via a frontend interface, can trigger such processing jobs of various sizes which are processed asynchronously on a computation resource system. Multiple such data analysis applications, potentially running on multiple client computing devices and operated by multiple users, can each generate and submit processing jobs, and each application/user can submit multiple processing jobs in quick succession, making it possible for the number of processing jobs submitted to exceed the capacity of the computation resource system. To handle this, in some systems, processing jobs waiting to be processed are stored in one or more queues, and only when the computation resource system has available capacity are processing jobs taken from a queue and processed.

To address these and other issues, the present disclosure describes, according to various implementations, a queuing system (also referred to simply as "the system") and related processes and functionality that provide a probabilistically prioritized job processing queue, optionally with per-user limits. The queuing system of the present disclosure can advantageously use a single centralized job queue (which may be maintained by multiple server instances), by which processing jobs can be multiplexed to one or more computation resources within a computation resource system. Such a centralized job queue can provide advantages over a system that implements separate job queues for each computation resource/module because it can allow more intelligent and efficient prioritization and routing decisions. For example, rather than immediately binding processing jobs to a specific computation resource/module and then only being able to do prioritization within the queue of the specific computation resource/module, the system of the present disclosure may advantageously prioritize processing jobs across multiple computation resources based on various useful scoring and criteria, as described herein.

Various features of the system can advantageously enable fairer and more efficient management of processing jobs from one or more users and their associated software applications. Various features of the system can also advantageously provide computational performance improvements in multiple respects. For example, user applications can be more responsive for multiple users simultaneously, and backend computation resources can be more efficiently and thoroughly used.

The system of the present disclosure can advantageously be used in conjunction with various types and combinations of user applications (on the frontend that users interact with) and computation resource systems (on the backend that handle processing of jobs). Examples of user applications that may benefit from the queuing system include data analysis applications, programming notebook-type applications, and the like. Examples of computation resource systems that may be used with the queuing system include distributed, parallelized, and/or clustered data processing systems, and the like.

Additionally, the system of the present disclosure may operate in conjunction with the flexible automatic scaling of back-end computation resources described in U.S. Patent Application No. 16/175371, filed October 30, 2018, and titled "INTELLIGENT COMPUTE REQUEST SCORING AND ROUTING", which is incorporated by reference herein. For example, processing jobs dispatched from the queue may be routed to appropriate computer resources to increase efficiency and lower risk during processing. Some embodiments include for example, a resource allocation system having a software architecture for intelligently routing compute requests to appropriate back-end compute resources. Processing jobs may be received from a number of front-end computer resources by the system over a network. The system receives and processes the queries through the queue disclosed herein, and then via a "routing pipeline", the system may assign a score to each compute resource based on how well it estimates the compute resource will be effective in executing the query. Such estimates may be based on the analysis of the query itself, as well as historical data. The system then tries to provide a compute request to the compute resources, starting from the one that was attributed the highest score. Additional details are provided in U.S. Patent Application No. 16/175371, filed October 30, 2018, and titled "INTELLIGENT COMPUTE REQUEST SCORING AND ROUTING", which is incorporated by reference herein.

Further, according to various embodiments, various interactive graphical user interfaces are provided for allowing various types of users interact with the systems and methods described herein to, for example, provide and receive information and inputs relevant to the queuing of processing jobs, and/or the like.

The interactive and dynamic user interfaces described herein are enabled by innovations in efficient interactions between the user interfaces and underlying systems and components. For example, disclosed herein are improved methods of receiving user inputs, translation and delivery of those inputs to various system components, automatic and dynamic execution of complex processes in response to the input delivery, automatic interaction among various components and processes of the system, and automatic and dynamic updating of the user interfaces. The interactions and presentation of data via the interactive user interfaces described herein may accordingly provide cognitive and ergonomic efficiencies and advantages over previous systems.

Various embodiments of the present disclosure provide improvements to various technologies and technological fields. For example, as described above, existing data storage and processing technology (including, e.g., routing and processing of multiple processing jobs on clusters of computation resources) is limited in various ways (e.g., processing jobs are not routed optimally, processing jobs are not prioritized optimally, and/or the like), and various embodiments of the disclosure provide significant improvements over such technology. Additionally, various embodiments of the present disclosure are inextricably tied to computer technology. In particular, various embodiments rely on detection of user inputs via graphical user interfaces, calculation of updates to displayed electronic data based on those user inputs, automatic processing of related electronic data, and presentation of the updates to displayed information via interactive graphical user interfaces. Such features and others (e.g., processing and analysis of large amounts of electronic data) are intimately tied to, and enabled by, computer technology, and would not exist except for computer technology. For example, the interactions with displayed data described below in reference to various embodiments cannot reasonably be performed by humans alone, without the computer technology upon which they are implemented. Further, the implementation of the various embodiments of the present disclosure via computer technology enables many of the advantages described herein, including more efficient interaction with and presentation of various types of electronic data.

Various combinations of the above and below recited features, embodiments, and aspects are also disclosed and contemplated by the present disclosure.

Additional embodiments of the disclosure are described below in reference to the appended claims, which may serve as an additional summary of the disclosure.

In various embodiments, systems and/or computer systems are disclosed that comprise a computer-readable storage medium having program instructions embodied therewith, and one or more processors configured to execute the program instructions to cause the systems and/or computer systems to perform operations comprising one or more aspects of the above- and/or below-described embodiments (including one or more aspects of the appended claims).

In various embodiments, computer-implemented methods are disclosed in which, by one or more processors executing program instructions, one or more aspects of the above- and/or below-described embodiments (including one or more aspects of the appended claims) are implemented and/or performed.

In various embodiments, computer program products comprising a computer-readable storage medium are disclosed, wherein the computer-readable storage medium has program instructions embodied therewith, the program instructions executable by one or more processors to cause the one or more processors to perform operations comprising one or more aspects of the above- and/or below-described embodiments (including one or more aspects of the appended claims).

### BRIEF DESCRIPTION OF THE DRAWINGS

The following drawings and the associated descriptions are provided to illustrate embodiments of the present disclosure and do not limit the scope of the claims. Aspects and many of the attendant advantages of this disclosure will become more readily appreciated as the same become better understood by reference to the following detailed description, when taken in conjunction with the accompanying drawings, wherein:
Figure 1 shows a block diagram of an example computing environment for providing a probabilistically prioritized processing queue, according to one or more embodiments;
Figures 2-3 show flowcharts illustrating example operations of a queuing system, according to one or more embodiments;
Figures 4A-4C illustrate example interactive graphical user interfaces related to a queuing system, according to one or more embodiments; and
Figure 5 shows a block diagram illustrating a computer system upon which various embodiments may be implemented.

### DETAILED DESCRIPTION

Although certain preferred embodiments and examples are disclosed below, the inventive subject matter extends beyond the specifically disclosed embodiments to other alternative embodiments and/or uses and to modifications and equivalents thereof. Thus, the scope of the claims appended hereto is not limited by any of the particular embodiments described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain embodiments; however, the order of description should not be construed to imply that these operations are order dependent. Additionally, the structures, systems, and/or devices described herein may be embodied as integrated components or as separate components. For purposes of comparing various embodiments, certain aspects and advantages of these embodiments are described. Not necessarily all such aspects or advantages are achieved by any particular embodiment. Thus, for example, various embodiments may be carried out in a manner that achieves or optimizes one advantage or group of advantages as taught herein without necessarily achieving other aspects or advantages as may also be taught or suggested herein.

### Overview

As noted above, in general, large scale, multicomputer datacenters host large quantities of data. In response to user queries and/or other inputs to manipulate the large quantities of data (e.g., via a data analysis software application), the datacenter may distribute a "compute request" (also referred to herein as a "processing job", and/or the like) to one of a number of compute resources (also referred to herein as "computer resources", "computation resources", "computation modules", and/or the like) which may be part of a computation resource system (also referred to herein as a "backend server cluster", "compute cluster", and/or the like), the compute request comprising a communication from the datacenter for a particular compute resource to perform one or more data processing tasks. Multi-computer data centers rely on load balancers to route queries and distribute load across available computer resources of a computation resource system.

A common feature of the architecture of data analysis applications that may produce processing jobs is that users, via a frontend interface, can trigger such processing jobs of various sizes which are processed asynchronously on a computation resource system. Multiple such data analysis applications, potentially running on multiple client computing devices and operated by multiple users, can each generate and submit processing jobs, and each application/user can submit multiple processing jobs in quick succession, making it possible for the number of processing jobs submitted to exceed the capacity of the computation resource system. To handle this, in some systems, processing jobs waiting to be processed are stored in one or more queues, and only when the computation resource system has available capacity are processing jobs taken from a queue and processed.

To address these and other issues, the present disclosure describes, according to various implementations, a queuing system (also referred to simply as "the system") and related processes and functionality that provide a probabilistically prioritized job processing queue, optionally with per-user limits. The queuing system of the present disclosure can advantageously use a single centralized job queue (which may be maintained by multiple server instances), by which processing jobs can be multiplexed to one or more computation resources within a computation resource system. Such a centralized job queue can provide advantages over a system that implements separate job queues for each computation resource/module because it can allow more intelligent and efficient prioritization and routing decisions. For example, rather than immediately binding processing jobs to a specific computation resource/module and then only being able to do prioritization within the queue of the specific computation resource/module, the system of the present disclosure may advantageously prioritize processing jobs across multiple computation resources based on various useful scoring and criteria, as described herein.

Various features of the system can advantageously enable fairer and more efficient management of processing jobs from one or more users and their associated software applications. Various features of the system can also advantageously provide computational performance improvements in multiple respects. For example, user applications can be more responsive for multiple users simultaneously, throughput of processing jobs can be increased and backend computation resources can be more efficiently and thoroughly used.

The system of the present disclosure can advantageously be used in conjunction with various types and combinations of user applications (on the frontend that users interact with) and computation resource systems (on the backend that handle processing of jobs). Examples of user applications that may benefit from the queuing system include data analysis applications, programming notebook-type applications, and the like. Examples of computation resource systems that may be used with the queuing system include distributed, parallelized, and/or clustered data processing systems, and the like.

Additionally, the system of the present disclosure may operate in conjunction with the flexible automatic scaling of back-end computation resources described in U.S. Patent Application No. 16/175371, filed October 30, 2018, and titled "INTELLIGENT COMPUTE REQUEST SCORING AND ROUTING", which is incorporated by reference herein. For example, processing jobs dispatched from the queue may be routed to appropriate computer resources to increase efficiency and lower risk during processing. Some embodiments include for example, a resource allocation system having a software architecture for intelligently routing compute requests to appropriate back-end compute resources. Processing jobs may be received from a number of front-end computer resources by the system over a network. The system receives and processes the queries through the queue disclosed herein, and then via a "routing pipeline", the system may assign a score to each compute resource based on how well it estimates the compute resource will be effective in executing the query. Such estimates may be based on the analysis of the query itself, as well as historical data. The system can then try to provide a compute request to the compute resources, starting from the one that was attributed the highest score. Additional details are provided in U.S. Patent Application No. 16/175371, filed October 30, 2018, and titled "INTELLIGENT COMPUTE REQUEST SCORING AND ROUTING", which is incorporated by reference herein.

Further, according to various embodiments, various interactive graphical user interfaces are provided for allowing various types of users interact with the systems and methods described herein to, for example, provide and receive information and inputs relevant to the queuing of processing jobs, and/or the like.

The interactive and dynamic user interfaces described herein are enabled by innovations in efficient interactions between the user interfaces and underlying systems and components. For example, disclosed herein are improved methods of receiving user inputs, translation and delivery of those inputs to various system components, automatic and dynamic execution of complex processes in response to the input delivery, automatic interaction among various components and processes of the system, and automatic and dynamic updating of the user interfaces. The interactions and presentation of data via the interactive user interfaces described herein may accordingly provide cognitive and ergonomic efficiencies and advantages over previous systems.

Various embodiments of the present disclosure provide improvements to various technologies and technological fields. For example, as described above, existing data storage and processing technology (including, e.g., routing and processing of multiple processing jobs on clusters of computation resources) is limited in various ways (e.g., processing jobs are not routed optimally, processing jobs are not prioritized optimally, and/or the like), and various embodiments of the disclosure provide significant improvements over such technology. Additionally, various embodiments of the present disclosure are inextricably tied to computer technology. In particular, various embodiments rely on detection of user inputs via graphical user interfaces, calculation of updates to displayed electronic data based on those user inputs, automatic processing of related electronic data, and presentation of the updates to displayed information via interactive graphical user interfaces. Such features and others (e.g., processing and analysis of large amounts of electronic data) are intimately tied to, and enabled by, computer technology, and would not exist except for computer technology. For example, the interactions with displayed data described below in reference to various embodiments cannot reasonably be performed by humans alone, without the computer technology upon which they are implemented. Further, the implementation of the various embodiments of the present disclosure via computer technology enables many of the advantages described herein, including more efficient interaction with and presentation of various types of electronic data.

### Example Queuing System and Related Computing Environment

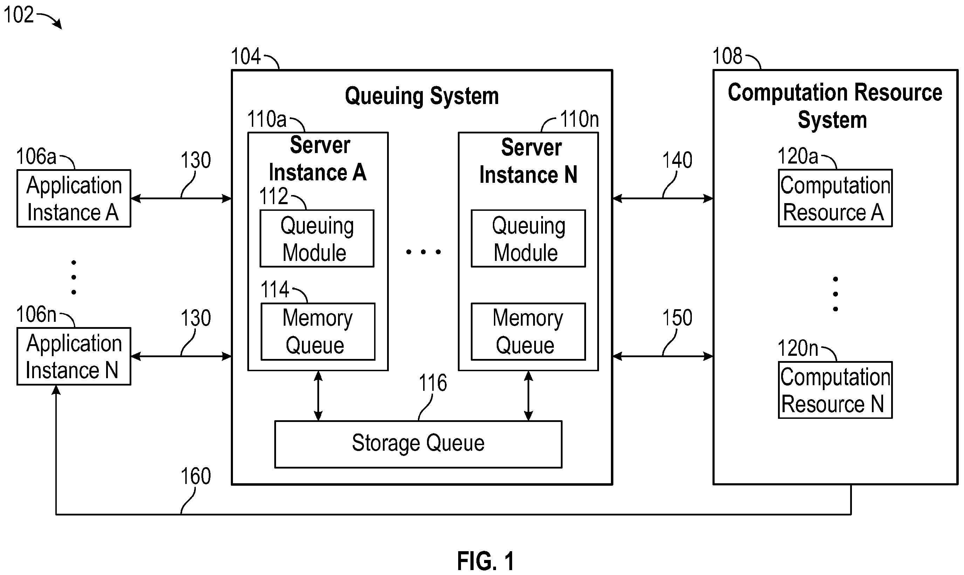

Figure 1 shows a block diagram of an example computing environment 102 for providing a probabilistically prioritized processing queue, according to one or more embodiments. The example computing environment 102 includes a queuing system 104, one or more user application instances 106a-106n, and a computation resource system 108.

The application instances 106a-106n can include any of various type of user software applications, operated by one or more users via various user computing devices. The user computing devices may include, for example, desktops, laptops, terminals, smartphones, smartTVs, and/or the like. The application instances 106 may include various types of software applications, such as data analysis applications, programming notebook-type applications, and the like. Such application instances 106 may include one or more views of data, which views may need to be generated by executing one or more data processing jobs, which data processing jobs may include, for example, queries, calculations, generating visualizations, and/or the like. One or more application instances 106 may run on each of the one or more user computing devices, and may be associated with one or more users. The application instances 106a-106n can communicate with queuing system 104 directly or indirectly via any appropriate communications links 130 (e.g., one or more communications links, one or more computer networks, one or more wired or wireless connections, the Internet, any combination of the foregoing, and/or the like).

The computation resource system 108 can include one or more computation resources 120a-120n. The computation resource system 108 may include various distributed, parallelized, and/or clustered computation resources 120a-120n. The computation resource system 108 may comprise a "back-end" or "cloud" server or other computing system. The computation resource system 108 may be separate from and/or remote from other aspects of the computing environment 102. In some implementations, the computation resource system 108 and the queuing system 104 may operate in a same "back-end" or "cloud" server or other computing system. The computation resources 120a-120n may comprise modules within one or more clusters of the computation resource system 108. In various implementations, the computation resources 120 may be configured with varying capabilities, processing power, memory, and/or the like. For example, the computation resources 120 may vary according to a number of CPUs or type of CPUs allocated to the computation resource, an interface speed of the computation resource, the amount of RAM memory or other type of memory allocated to the computation resource, the amount of cache memory on one or more CPUs of the computation resource, the speed of one or more of the CPUs of the computation resource, and/or any other hardware, software or firmware characteristic or feature of a computation resource that affects its processing power.

Processing jobs (also referred to herein simply as "jobs") may be sent to and received from the computation resource system 108 directly or indirectly via any appropriate one or more communications links 140 (e.g., one or more communications links, one or more computer networks, one or more wired or wireless connections, the Internet, any combination of the foregoing, and/or the like). Additionally, information related to the status of the various processing jobs and the computation resources 120a-120n may be communicated directly or indirectly via any appropriate one or more communications links 150 (e.g., one or more communications links, one or more computer networks, one or more wired or wireless connections, the Internet, any combination of the foregoing, and/or the like). Further, the computation resource system 108 may communicate with the user application instances 106a-106n directly or indirectly, e.g., to provide computation job results, via the queuing system 104 and/or another computing system, and/or via any appropriate one or more communications links 160 (e.g., one or more communications links, one or more computer networks, one or more wired or wireless connections, the Internet, any combination of the foregoing, and/or the like). The communications links described herein are for illustrative purposes, and in various implementations, the various communications links of the computing environment 102 may be combined and/or separated into additional communications links.

Processing jobs may be sent to and received by the computation resource system 108, processed by one or more computation resources 120, and results may then be provided by the computation resource system 108. Accordingly, while not represented in Figure 1, the computation resource system 108 and/or the queuing system 104 may have access to data stores and/or data sources necessary for accessing and operating on data according to the processing jobs. The computation resource system 108 may further communicate with, for comprise, for example, one or more data transformation systems or data pipeline systems.

In some embodiments, data of the system may be conceptually structured according to databases, tables, an object-centric data model represented by ontology, and/or the like. A conceptual data model may be independent of any particular database used for durably storing one or more database(s) based on the ontology. For example, each object of the conceptual data model may correspond to one or more rows in a relational database or an entry in Lightweight Directory Access Protocol (LDAP) database, or any combination of one or more databases. An ontology may include stored information providing a data model for storage of data in the database. The ontology may be defined by one or more object types, which may each be associated with one or more property types. At the highest level of abstraction, a data object may be a container for information representing things in the world. For example, a data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object within a database.

Different types of data items or objects may have different related columns or property types. Each property as represented by data in the database system may have a property type defined by the ontology used by the database. Objects may be instantiated in the database in accordance with the corresponding object definition for the particular object in the ontology. Links may represent connections between two data objects. In one embodiment, the connection is either through a relationship, an event, or through matching properties. A relationship connection may be asymmetrical or symmetrical. In one embodiment, when two data objects are connected by an event, they may also be connected by relationships, in which each data object has a specific relationship to the event. Each data object can have multiple links with another data object to form a link set. Each link as represented by data in a database may have a link type defined by the database ontology used by the database.

Advantageously, use of a dynamic ontology may allow a user to take advantage of an ontological data model, while not being constrained to a hard-coded ontology. Hard-coded ontologies can be overly simple (e.g., lacking detailed semantic properties, making classification difficult but limiting analysis) or overly complex (e.g., having overly detailed semantic properties, making classification difficult). Use of a dynamic ontology can allow a user to define the desired level of semantic granularity, making dynamic ontologies suitable for a plurality of different and diverse uses (e.g., fraud prevention, cyber security, governmental applications, capital markets, etc.). Using a data preparing and cleaning system prior to importing data into an ontology-based database system can provides the advantages of the dynamic ontology with the assurance that the data input is consistent, has no or minimal errors, and/or has been preprocessed in accordance with certain data analysis criteria to place the input data in better condition for further analysis.

While using an ontological data model, as described above, may increase data analysis efficiencies in some aspects, processing such linked data sets can require increased computer resources, for example, more memory, more CPUs, and the like. Accordingly, a query may include information indicating the number of data sets involved in a processing task in the size of the data sets. In addition, processing information received from a back-end computing resource after it has completed a processing job may be saved, and then used as a reference. For example, when the system receives subsequent processing jobs that indicate multiple data sets are involved in the processing, the stored information may be referenced to help determine the type or configuration of a computing resource that has been previously used for similar processing and if that type or configuration was sufficient to efficiently and successfully perform the requested processing job.

Results of completed processing jobs may be provided to the queuing system 104 (after which they may be provided by the queuing system 104 to the application instances 106), the application instances 106, and/or to another appropriate aspect of the computing environment 102 that may not be shown in the example of Figure 1. As noted above, the queuing system 104 may operate in conjunction with the flexible automatic scaling of backend computation resources described in U.S. Patent Application No. 16/175371, filed October 30, 2018, and titled "INTELLIGENT COMPUTE REQUEST SCORING AND ROUTING", which is incorporated by reference herein. For example, processing jobs dispatched from the queuing system 104 may be routed to appropriate computer resources to increase efficiency and lower risk during processing. Some embodiments include for example, a resource allocation system (which may be incorporated into the queuing system 104, the computation resource system 108, and/or another or separate aspect of the computing environment 102) having a software architecture for intelligently routing compute requests to appropriate backend computation resources. Processing jobs may be received from a number of front-end computer resources (e.g., application instances 106) by the system over a network.

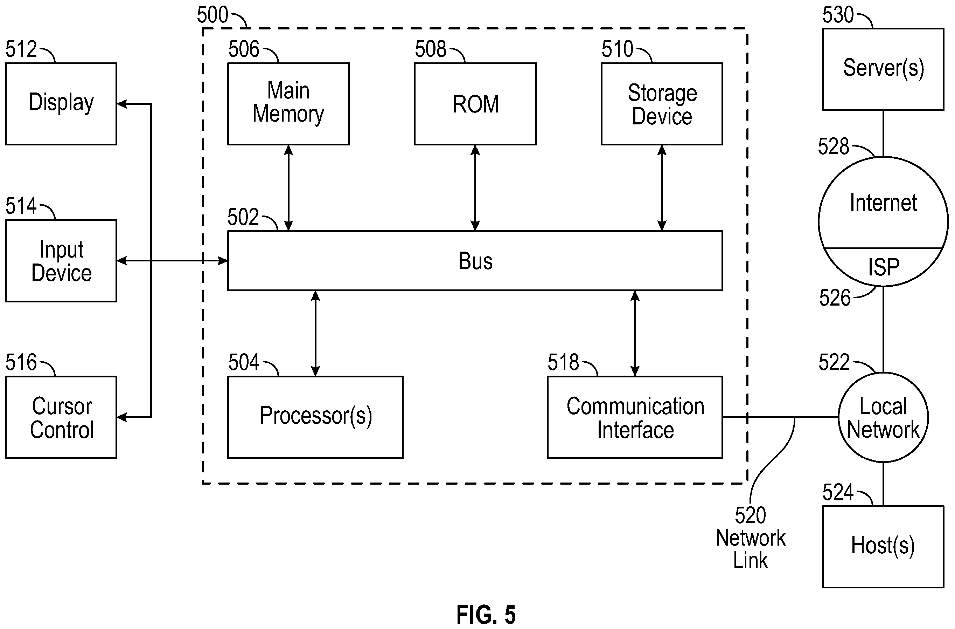

The queuing system 104 may include one or more server instances 110a-110n. The one or more server instances 110 may be, in various implementations, virtual and/or physical. The queuing system 104 may, for example, include various distributed, parallelized, and/or containerized aspects, such as one or more server instances 110. The queuing system 104 may include various aspects, such as one or more processors, memory, data storage, computer-readable instructions, and/or the like, as described in reference to Figure 5. Each server instance 110 of the queuing system 104 may include a queuing module 112 and a memory queue 114. The queuing module 112 may comprise, in part, computer-readable instructions for writing to and updating a job queue (also referred to herein simply as "the queue") of the system. For example, the queuing module 112 may score processing jobs, determine and apply bounds, sample the processing jobs from the job queue, and update the job queue, among other functionalities (and as described herein). The memory queue 114 may store the job queue of the system (e.g., in a memory or storage of the system), which queue may be updated frequently by the queuing module 112, as described herein. The queuing modules 112 and/or the memory queues 114 of the one or more server instances 110a-110n may be synchronized by a storage queue 116 that may communicate with each of the server instances 110a-110n. Having a plurality of server instances 110a-110n may advantageously provide redundancy to the operation of the queuing system 104, and/or may advantageously provide expanded processing capability to the queuing system 104. In some implementations the system may include a single server instance 110, while in other implementations the system may include multiple server instances 110. The storage queue 116 may provide synchronization such that the system may be considered to have a single centralized job queue, even in implementations in which the system includes multiple server instances 110.

As mentioned above, the queuing system 104 may operate in conjunction with the flexible automatic scaling of back-end computation resource described in U.S. Patent Application Publication No. 2020/0081992, filed October 30, 2018, and titled "INTELLIGENT COMPUTE REQUEST SCORING AND ROUTING", which is hereby incorporated by reference in its entirety. For example, the system receives and processes the queries through the queue disclosed herein, and then may, via a "routing pipeline", assign a score to each compute resource based on how well it estimates the compute resource will be effective in executing the query. Such estimates may be based on the analysis of the query itself, as well as historical data. The system can then try to provide a compute request to the compute resources, starting from the one that was attributed the highest score. Additional details are provided in U.S. Patent Application No. 16/175371, filed October 30, 2018, and titled "INTELLIGENT COMPUTE REQUEST SCORING AND ROUTING", which is incorporated by reference herein.

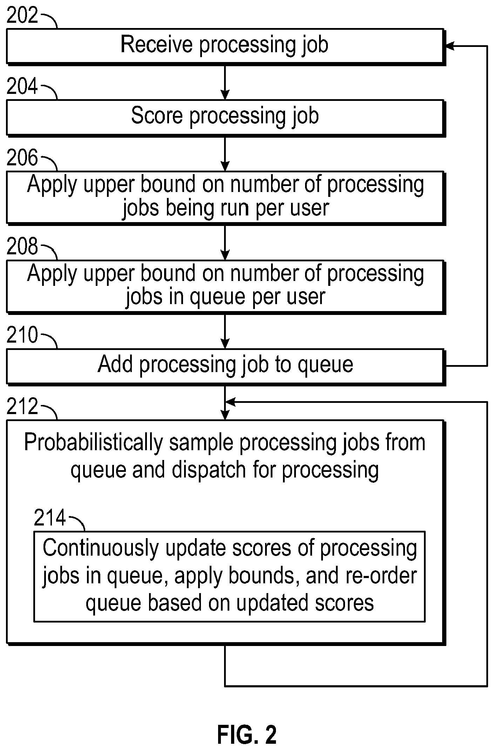

Via the queuing module 112 and the memory queue 114, the queuing system 104 provides job queuing and dispatch functionality for processing jobs incoming from the application instances 106a-106n. Figures 2-3 show flowcharts illustrating operations, which may be processing operations, for example representing job queuing and dispatch functionality of the queuing system 104, according to one or more embodiments. The blocks of the flowcharts illustrate example implementations, and in various other implementations various blocks may be rearranged, optional, and/or omitted, and/or additional block may be added. In various embodiments, the example operations of the system illustrated in Figures 2-3 may be implemented, for example, by one or more aspects of the queuing system 104, the server instances 110, the computation resource system 108, other aspects of the computing environment 102, and/or the like.

Referring to Figure 2, at block 202, an operation may comprise receiving a processing job. For example, the system receives a processing job, e.g., from an application instance 106 associated with a user (e.g., a user interacting with a front-end user interface of the software application on a user computing device). At block 204, another operation may comprise scoring the processing job. For example, the system determines a score for the received processing job. For example, processing jobs may be scored based on a combination of their estimated duration (e.g., an estimated processing time) and how many jobs the submitting user already has running (e.g., a number of processing jobs currently running in the computation resource system 108 associated with the user). Larger job size (e.g., jobs with an estimated longer processing duration/time) and a larger number of jobs already running for the submitting user may each result in higher scores for the received processing job. In various implementations, the two scores may be added, combined based on a weighted average, and/or the like.

At block 206 and block 208, respective operations may comprise applying an upper bound on number of processing jobs being run per user and applying an upper bound on number of processing jobs in the queue per user. For example, the system determines whether certain upper bounds are satisfied. If the upper bounds are satisfied, at block 210 the processing job is added to the queue. If the upper bounds are not satisfied, the processing job is not added to the processing queue, and instead the processing job is either denied or held by the system for re-evaluation in the future. As described below, in the event a job is denied, the user may be notified via a user interface of an application instance. For example, the queuing system 104 may provide a notification to the applicable application instance 106 that the processing job was denied, and the application instance 106 may be caused, in response, to notify the user. In some implementations, the user interface may provide a button or other user input method for the user to re-request that the related processing job be performed, in which case the application instance may re-send the processing job to the queuing system 104 where it will be received and re-evaluated as described above. Alternatively, the system may hold the processing job for re-evaluation. Held processing jobs may be re-evaluated (e.g., as described above) continuously, substantially continuously, frequently, regularly, periodically, intermittently, on demand, or any combination of the foregoing and/or the like. In some implementations, the user may be notified that a processing job is held and not in the queue. As indicated by the flowchart of Figure 2, the system may continuously, substantially continuously, frequently, regularly, periodically, intermittently, on demand, or any combination of the foregoing and/or the like, receive processing jobs, score processing jobs, determine bounds for processing jobs, and add, hold, or deny processing jobs (e.g., at blocks 202-210).

Referring to block 206, the system imposes an upper bound on the number or quantity of jobs a user can have running (e.g., a number of processing jobs currently running in the computation resource system 108 associated with the user) at once, with additional jobs received and associated with the user being held until existing ones owned by that user have completed (e.g., such that the number of processing jobs running and associated with the user are below the upper bound). Alternatively, such additional jobs may be denied. As noted, the user can be informed when the job is held or denied. Accordingly, the system determines whether a threshold is satisfied (e.g., an upper bound is met), and if so, does not allow a job to proceed. In some implementations, such jobs may be added to the queue, but not allowed to process until the upper bound is no longer breached. Alternatively, such jobs may be added to the queue but with a substantial additional score added. Advantageously, the upper bound of block 206 may advantageously limit the worst-case impact on other users of one user submitting many jobs at once or in a small time window. Said other users may be submitting, or wish to submit, a relatively small number of processing jobs of high importance, for example relating to mission critical tasks such as controlling of computer resources or machinery, authentication of one or more users, mitigation against computer viruses or the like, but said processing jobs may not be able to proceed if one or more other users submit many jobs at once or in a small time window. Examples of an upper bound under block 206 may include 5, 10, 15, 20, 50, 100, or some other number.

Referring to block 208, the system also imposes an upper bound on the number or quantity of jobs a user can have in the queue, with additional jobs received and associated with the user being held until existing ones owned by that user have left the queue (e.g., been dispatched for processing such that the number of processing jobs in the queue and associated with the user are below the upper bound). Alternatively, such additional jobs may be denied. As noted, the user can be informed when the job is held or denied. Accordingly, the system determines whether a threshold is satisfied (e.g., an upper bound is met), and if so, does not allow a job to proceed. In some implementations, such jobs may be added to the queue, but not allowed to process until the upper bound is no longer breached. Alternatively, such jobs may be added to the queue but with a substantial additional score added. Advantageously, the upper bound of block 208 may advantageously prevent the queue from being filled with many jobs from a single user whose jobs cannot be processed due to reaching the above limit on running jobs. This can advantageously ensure the queue remains performant and available to one or more other users for the same reasons given above, even in the case of a user submitting a very large number of jobs at once.

As described in reference to Figure 1, the computation resource system 108 may communicate with the queuing system 104 via, e.g., one or more communications links 150, to provide information related to the status of the various processing jobs and the computation resources 120. Accordingly, the queuing system 104 may receive information necessary to determine scores for received jobs and apply bounds, as described above. Such information may be communicated continuously, substantially continuously, frequently, regularly, periodically, intermittently, on demand, or any combination of the foregoing and/or the like. For example, such information may be communicated with minimal delay, such as within milliseconds or less. Example technical features to achieve such functionality are described below.

Referring again to Figure 2 and block 210, an operation may comprise adding a processing job to the queue. For example, jobs may be added to the queue when the upper bounds are not breached. Jobs in the queue are weighted or ordered based on their scores, with lower scored jobs being positioned at the top of the queue, and higher scored jobs being positioned at the end of the queue. In other implementations the scoring and ordering may be reversed, such that higher scored jobs are positioned at the top of the queue, or the queue order may be reversed. In any case, the jobs are ordered in the queue such that jobs that are smaller and/or associated with a user that has fewer jobs already running, are given preference in terms of how they are dispatched for processing by one or more compute resources over jobs that are bigger and/or associated with a user that has more jobs already running.

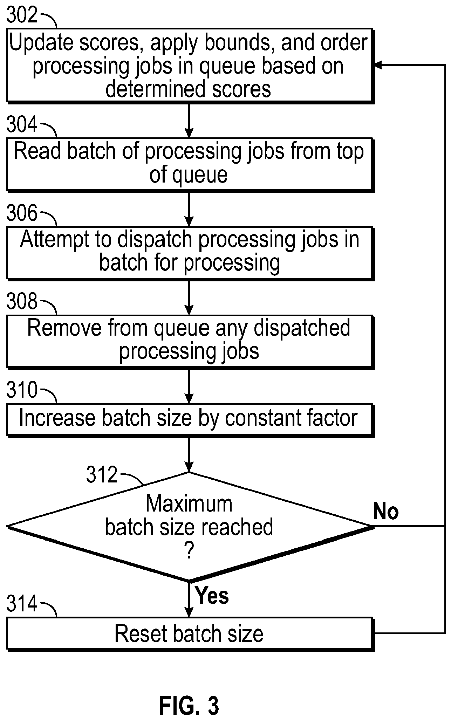

At block 212, another operation may comprise probabilistically sampling processing jobs from the queue and dispatching for processing. For example, jobs are probabilistically sampled from the ordered queue, weighted by score. That is, jobs are sampled with preference given to jobs with lower scores (e.g., jobs that are smaller and/or associated with a user that has fewer jobs already running). The sampling of jobs from the queue is described in additional detail in reference to Figure 3 below. When a job is sampled, the system attempts to dispatch it for processing by a computation resource of the computation resource system 108. Such dispatching may advantageously be performed asynchronously in a separate thread, such that the management of the queue state can operate independently from the management of the state of the jobs in the queue. The ordering/weighting of the queue can advantageously ensure that smaller jobs and jobs submitted by users with fewer running jobs tend to spend less time in the queue compared to larger jobs and jobs by users with more running jobs, because the system attempts to dispatch such smaller jobs and jobs submitted by users with fewer running jobs more often. This assists with throughput in the sense that smaller processing jobs can be removed from the queue more frequently, as capacity becomes available at the one or more computation resources, enabling other processing jobs to enter the queue (which may have limited capacity), and/or balance in terms of a greater number of users being able to provide their processing jobs to the queue, avoiding bottlenecks at, for example, one or more user computer devices if the queue cannot accept new processing jobs until other processing jobs are dispatched.

When dispatching a job, the system can use one or more of a number of routing strategies to find an optimal computation resource for the job. For example, jobs may be dispatched only if there is a suitable computation resource that is not currently at capacity. If there is no such computation resource available, the job may be left in the queue. In some cases, even if there is such a suitable computation resource available for a given job, dispatching the job may still fail due to inherent race conditions in a distributed computation resource system. To mitigate such issues, the system can include a number of technical mechanisms to determine the availability of computation resources very rapidly. Such technical mechanisms may utilize the one or more communications links 150, for example, and may include using "server sent events" ("SSE") for receiving updates on the load of the computation resources as fast as possible, and computation resource "quality of service" ("QOSing") for receiving rapid updates and rapid return of jobs to the queue in the event that the system does have out-of-date data and routes a job to a computation resource that is already full. Such mechanisms may also include the queuing module 112 storing and internally updating information regarding a number of jobs with any given computation resource when jobs are dispatched to those resources (e.g., even if execution of that job has not yet been reported by the computation resource) to avoid sending multiple jobs to a computation resource that the computation resource cannot handle. Alternatively, or additionally, such mechanisms may include storing and updating information about the size of the processing job(s) with any given computation resource so as to avoid sending job(s) to a computation resource that does not currently have processing capability to handle one or more processing jobs of said size. For example, such mechanisms, e.g., one or more queuing modules 112 may store information about the processing and/or memory capability of the one or more compute resources, e.g. information representing respective CPUs of said one or more compute resources, for example including information about clock speed of the respective CPUs, and/or associated memory (e.g. RAM) capacity. For example, such mechanisms may also store and update information representing respective current utilization of said one or more compute resources, e.g., one or more of how many processing jobs are currently being processed, what percentage of the CPU and/or memory capability is currently being utilized etc. On this basis, such mechanisms may determine which computation resource a processing job should be dispatched to and/or not dispatched to, which may change over time. Updating of such information may be accomplished by the system continuously, substantially continuously, frequently, regularly, periodically, intermittently, on demand, or any combination of the foregoing and/or the like. For example, such updating may be performed with minimal delay, such as within milliseconds or less.

Additional example routing strategies to find an optimal computation resource for a job, which may be combined with those described herein, are described in U.S. Patent Application No. 16/175371, filed October 30, 2018, and titled "INTELLIGENT COMPUTE REQUEST SCORING AND ROUTING", which is incorporated by reference herein.

As mentioned above, at block 214 an operation may comprise continuously updating scores of processing jobs in the queue, applying bounds and re-ordering the queue based on updated scores. For example, the system updates the queue as new jobs are received, as jobs are dispatched, and as new information relevant to the scoring of jobs and application of bounds is received. Such updating can involve, for example, updating the scores of jobs in the queue, re-applying bounds, removing jobs from the queue, adding jobs to the queue, and re-ordering jobs in the queue based on updated scores. The system may perform such updating continuously, substantially continuously, frequently, regularly, periodically, intermittently, on demand, or any combination of the foregoing and/or the like. For example, such updating may be performed with minimal delay, such as within milliseconds or less.

Referring now to Figure 3, the probabilistic sampling of jobs from the queue (e.g., as mentioned in reference to block 212 of Figure 2) is described. At block 302, an operation may comprise updating scores, applying bounds, and ordering processing jobs in the queue based on determined scores. For example, the queue may be updated as generally described above in references to block 214 of Figure 2. Such updating includes, at least, and as described above, determining the jobs in the queue, and ordering or weighting the jobs in the queue according to their respective scores. At block 304, an operation may comprise reading a batch of processing jobs from the top of the queue, i.e. the prioritized end of the queue. For example, a batch of jobs (e.g., a set of one or more jobs) are read from the top of the queue (e.g., the jobs having preferred, smaller scores), using a small initial batch size (e.g., between 1 and 10, or alternatively a larger number). At block 306, an operation may comprise attempting to dispatch processing jobs in the batch for processing. For example, the system attempts to dispatch the jobs in the batch for processing by one or more computation resources 120 of the computation resource system 108 (as also described above). Dispatch and processing of jobs may be performed asynchronously. At block 308, an operation may comprise removing from the queue any dispatched processing jobs. For example, any jobs in the batch that are successfully dispatched are removed from the queue. Any jobs not successfully dispatched (e.g., no computation resources 120 are available or suitable for the job) is or are left in the queue. Accordingly, jobs are removed from the queue only when successfully dispatched to the computation resource system 108 for processing.

At block 310, an operation may comprise increasing the batch size by a constant factor. For example, if the batch did not include all jobs in the queue, the batch size is increased by a constant factor. For example, the batch size may be increased by a factor of 2, 3, 4, or some other number. Alternatively, the batch size may be increased by an adjustable factor, or a factor that depends on some variable, such as the queue size. At block 312, an operation may comprise determining whether a maximum batch size is reached. If not, the process continues back to blocks 302-310, such that a batch of the increased size is read from the top of the updated queue, read jobs are dispatched if possible, and dispatched jobs are removed from the queue. The process is repeated until, at block 312 and block 314, the batch size reaches a defined maximum or includes the entire queue, at which point an operation may comprise resetting the batch size, e.g., the batch size is reset to the initial batch size. In various implementations, the system may determine whether the maximum batch size is reached before increasing the batch size. In various implementations, the system may perform the process of Figure 3 continuously, substantially continuously, frequently, regularly, periodically, intermittently, on demand, or any combination of the foregoing and/or the like. For example, such processing may be performed with minimal delay, such as within milliseconds or less.

By reading batches of increasing size in the way described in reference to Figure 3, advantageously jobs near the head of the queue, e.g., the prioritized end, can be included in more batches than jobs near the end of the queue, and so can be more frequently attempted to be dispatched. Advantageously, this can result in high priority jobs being likely to spend less time in the queue waiting to be dispatched compared to low priority jobs.

The job queuing and dispatch functionality described above can include continuous, substantially continuous, frequent, regular, periodic, intermittent, on demand, or any combination of the foregoing and/or the like, updating of the job scores, application of upper bound constraints, re-ordering of the queue, dispatching of jobs, and the like. Additionally, in various implementations, the upper bound constraints (e.g., per-user job limits) may be adjusted dynamically, according to expected load of the computation resource system. The expected load of the computation resource system may be based on various measurements or metrics and may, for example, utilize a machine learning model or similar which may be trained using one or more inputs representing a number of processing jobs being processed by the computation resource system and, for example, one or more other inputs such as one or more of: number of users, type or role of users, type of data, date, time of day etc. In an inference stage, the trained model may receive one or more of said inputs in order to predict the expected load of the computation resource system. The type of machine learning model may comprise any suitable model, e.g. a decision tree, regressor and/or neural network, configured for predicting outcomes in terms of load on one or more computation systems given a particular set of inputs. In various implementations, the system may dispatch more jobs than the per-user job limit if there is computation availability in the computation resource system, and then pre-empt/terminate those jobs if other users need the computation resources.

In various implementations, the system may further order the processing jobs in the queue based on a display location in a user software application of data to be displayed in relation to those processing jobs. For example, jobs associated with data to be displayed at a top of a display page (e.g., in a user interface) may be scored so as to prioritize those jobs over jobs associated with data to be displayed at a bottom of the display page.

### Example Interactive Graphical User Interfaces

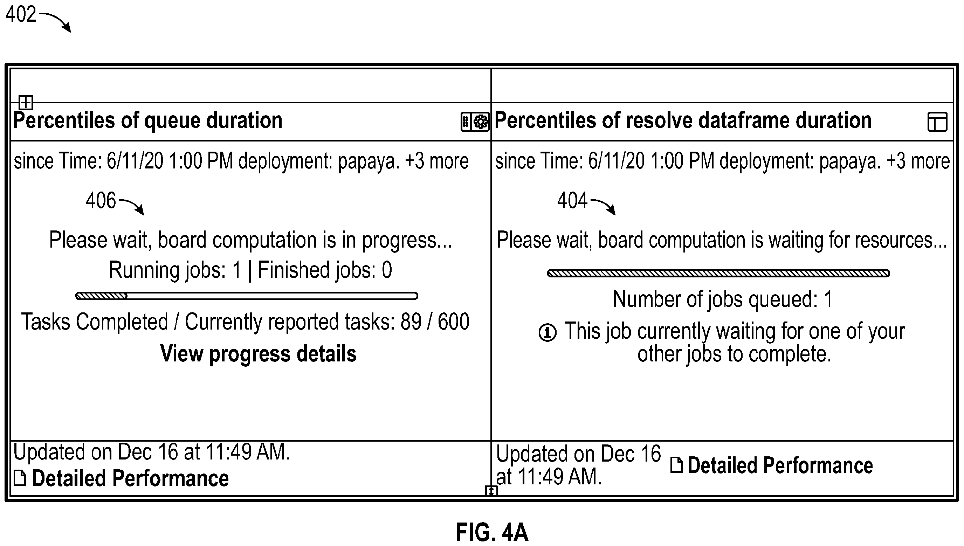

Figures 4A-4C illustrate example interactive graphical user interfaces of the system, according to one or more embodiments. The example user interfaces are provided for illustrative purposes to show various functionalities of the system. In other implementations, the interactive graphical user interfaces may include more or fewer elements, may be arranged differently, and/or may be combined or divided. The various example interactive graphical user interfaces may be generated/provided by the application instances 106 and/or other aspects of the computing environment 102. For example, the queuing system 104 may cause the interactive graphical user interfaces to be generated and/or displayed to the user. As described below, information provided in the interactive graphical user interfaces may be based on, for example, information provided by the queuing system 104.

The example interactive graphical user interfaces of Figures 4A-4C may be associated with user software applications that may provide processing jobs to the system of the present disclosure. Such an example application may include a data analysis application that may show one or more data visualizations based on inputs from a user (e.g., selecting data, filtering data, applying operations to data, selecting data visualizations, and/or the like). A user interface in such an application may include multiple data visualizations that may need to be updated if, for example, the user opens the application to view the user interface, the underlying data is updated, or the user modifies the selected data in some way upstream of the displayed visualizations. In such situations, the application may request processing jobs to calculate the data to be displayed in each of the multiple visualizations.

For example, Figure 4A shows an example user interface 402 of an application with two visualizations. The first visualization, on the left of the user interface, includes a job that has already been sent to the queuing system, dispatched, and is being processed by the computation resource system 108. This status is represented by information 406 provided to the user, which information is based on information provided by the queuing system 104 and/or the computation resource system 108. For example, the information 406 indicates that the visualization is being generated ("board computation is in progress..."), that one processing job is currently running, and that 89 out of 600 tasks associated with the running job(s) are completed. Further, a progress bar is shown to the user representing a percentage of the processing job(s) completed.

The second visualization, on the right of the user interface, includes a job that is in the queue of the queuing system 104, waiting to be dispatched. This status is represented by information 404 provided to the user, which information is based on information provided by the queuing system 104. For example, the information 404 indicates that a job is in the queue ("board computation is waiting for resources..."), and that one processing job is currently in the queue. If multiple processing jobs are associated with the visualization, the information 404 may indicate that they are in the queue, or that some or all of the jobs are dispatched and running.

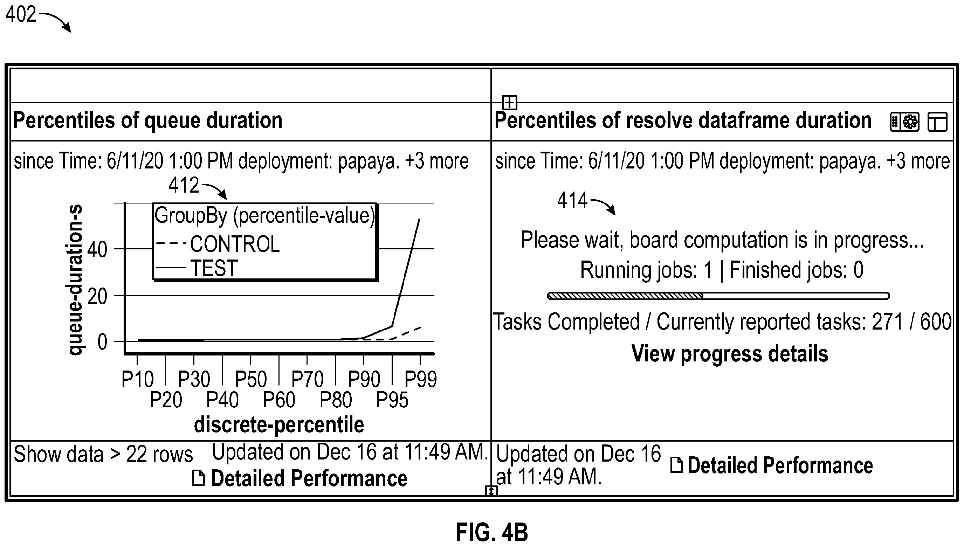

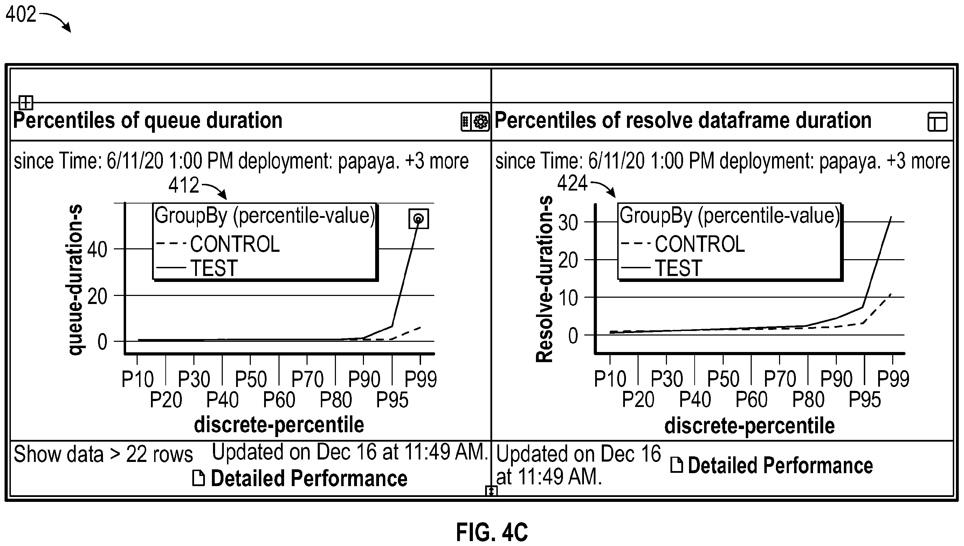

Figure 4B shows the example user interface 402 some time after Figure 4A. As shown, the job associated with the first visualization on the left of the user interface has completed, and the resulting data has been provided to the application instance 106 for display as visualization 412. Regarding the second visualization on the right of the user interface, information 414 indicates that the associated job has now been dispatched from the queue and is running (with 271 out of 600 tasks associated with the running job(s) having been completed). Figure 4C shows the example user interface 402 some time after Figure 4C. As shown, the job associated with the second visualization on the right of the user interface has completed, and the resulting data has been provided to the application instance 106 for display as visualization 424.

In an implementation, if a processing job is denied, a processing job is held from the queue, an upper bound is hit, a processing job fails, and/or the like, the system may provide an indication to the user in a user interface of the application. Additionally, the system may provide a button or other user input element whereby a user may, for example, re-initiate submission of a job to the queue. Additionally, or alternatively, responsive to a processing job being denied because the upper bound associated with the number of the processing jobs of the user already in the queue is met or exceeded, the system may notify the user and provide a button or other user input element whereby the user may, via continued and/or guided humancomputer interaction, select to remove from the queue one or more of their own processing jobs already in the queue. The number of jobs removed from the queue may be such as to bring the number of processing jobs of the user already in the queue below the upper bound, by a sufficient amount to make way for new processing jobs of the user, which may have higher priority, to enter the queue. The jobs removed may be those having a current score indicative of a lower priority and/or those that most recently entered the queue. After a period of time, the removed jobs may be resubmitted.

### Additional Implementation Details and Embodiments

In an implementation the system (e.g., one or more aspects of the queuing system 104, the server instances 110, the computation resource system 108, other aspects of the computing environment 102, and/or the like) may comprise, or be implemented in, a "virtual computing environment". As used herein, the term "virtual computing environment" should be construed broadly to include, for example, computer-readable program instructions executed by one or more processors (e.g., as described in the example of Figure 5) to implement one or more aspects of the modules and/or functionality described herein. Further, in this implementation, one or more services/modules/engines/and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device (e.g., running one or more of the application instances 106) may be understood as modifying operation of the virtual computing environment to cause the request access to a resource from the system. Such functionality may comprise a modification of the operation of the virtual computing environment in response to inputs and according to various rules. Other functionality implemented by the virtual computing environment (as described throughout this disclosure) may further comprise modifications of the operation of the virtual computing environment, for example, the operation of the virtual computing environment may change depending on the information gathered by the system. Initial operation of the virtual computing environment may be understood as an establishment of the virtual computing environment. In some implementations the virtual computing environment may comprise one or more virtual machines, containers, and/or other types of emulations of computing systems or environments. In some implementations the virtual computing environment may comprise a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various embodiments of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure. For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various embodiments of the present disclosure. In this regard, each block in the flowchart or block diagrams may represent a service, module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in some implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above embodiments may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other embodiments, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

For example, Figure 5 shows a block diagram that illustrates a computer system 500 upon which various implementations and/or aspects (e.g., one or more aspects of the queuing system 104, the server instances 110, the computation resource system 108, the user computing devices, other aspects of the computing environment 102, and/or the like) may be implemented. Computer system 500 includes a bus 502 or other communication mechanism for communicating information, and a hardware processor, or multiple processors, 504 coupled with bus 502 for processing information. Hardware processor(s) 504 may be, for example, one or more general purpose microprocessors.

Computer system 500 also includes a main memory 506, such as a randomaccess memory (RAM), cache and/or other dynamic storage devices, coupled to bus 502 for storing information and instructions to be executed by processor 504. Main memory 506 also may be used for storing temporary variables or other intermediate information during execution of instructions to be executed by processor 504. Such instructions, when stored in storage media accessible to processor 504, render computer system 500 into a special-purpose machine that is customized to perform the operations specified in the instructions. The main memory 506 may, for example, include instructions to implement server instances, queuing modules, memory queues, storage queues, user interfaces, and/or other aspects of functionality of the present disclosure, according to various implementations.

Computer system 500 further includes a read only memory (ROM) 508 or other static storage device coupled to bus 502 for storing static information and instructions for processor 504. A storage device 510, such as a magnetic disk, optical disk, or USB thumb drive (Flash drive), and/or the like, is provided and coupled to bus 502 for storing information and instructions.

Computer system 500 may be coupled via bus 502 to a display 512, such as a cathode ray tube (CRT) or LCD display (or touch screen), for displaying information to a computer user. An input device 514, including alphanumeric and other keys, is coupled to bus 502 for communicating information and command selections to processor 504. Another type of user input device is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane. In some embodiments, the same direction information and command selections as cursor control may be implemented via receiving touches on a touch screen without a cursor.

Computing system 500 may include a user interface module to implement a GUI that may be stored in a mass storage device as computer executable program instructions that are executed by the computing device(s). Computer system 500 may further, as described below, implement the techniques described herein using customized hard-wired logic, one or more ASICs or FPGAs, firmware and/or program logic which in combination with the computer system causes or programs computer system 500 to be a special-purpose machine. According to one embodiment, the techniques herein are performed by computer system 500 in response to processor(s) 504 executing one or more sequences of one or more computer-readable program instructions contained in main memory 506. Such instructions may be read into main memory 506 from another storage medium, such as storage device 510. Execution of the sequences of instructions contained in main memory 506 causes processor(s) 504 to perform the process steps described herein. In alternative embodiments, hard-wired circuitry may be used in place of or in combination with software instructions.

Various forms of computer-readable storage media may be involved in carrying one or more sequences of one or more computer-readable program instructions to processor 504 for execution. For example, the instructions may initially be carried on a magnetic disk or solid-state drive of a remote computer. The remote computer can load the instructions into its dynamic memory and send the instructions over a telephone line using a modem. A modem local to computer system 500 can receive the data on the telephone line and use an infra-red transmitter to convert the data to an infra-red signal. An infra-red detector can receive the data carried in the infra-red signal and appropriate circuitry can place the data on bus 502. Bus 502 carries the data to main memory 506, from which processor 504 retrieves and executes the instructions. The instructions received by main memory 506 may optionally be stored on storage device 510 either before or after execution by processor 504.

Computer system 500 also includes a communication interface 518 coupled to bus 502. Communication interface 518 provides a two-way data communication coupling to a network link 520 that is connected to a local network 522. For example, communication interface 518 may be an integrated services digital network (ISDN) card, cable modem, satellite modem, or a modem to provide a data communication connection to a corresponding type of telephone line. As another example, communication interface 518 may be a local area network (LAN) card to provide a data communication connection to a compatible LAN (or WAN component to communicated with a WAN). Wireless links may also be implemented. In any such implementation, communication interface 518 sends and receives electrical, electromagnetic, or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the worldwide packet data communication network now commonly referred to as the "Internet" 528. Local network 522 and Internet 528 both use electrical, electromagnetic, or optical signals that carry digital data streams. The signals through the various networks and the signals on network link 520 and through communication interface 518, which carry the digital data to and from computer system 500, are example forms of transmission media.

Computer system 500 can send messages and receive data, including program code, through the network(s), network link 520 and communication interface 518. In the Internet example, a server 530 might transmit a requested code for an application program through Internet 528, ISP 526, local network 522 and communication interface 518.

The received code may be executed by processor 504 as it is received, and/or stored in storage device 510, or other non-volatile storage for later execution.

As described above, in various embodiments certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain embodiments, one or more of the computing devices and/or systems of the disclosure may include mobile computing devices, and user interfaces may be accessible through such mobile computing devices (for example, smartphones and/or tablets).

Many variations and modifications may be made to the above-described embodiments, the elements of which are to be understood as being among other acceptable examples. All such modifications and variations are intended to be included herein within the scope of this disclosure. The foregoing description details certain embodiments. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

The term "substantially" when used in conjunction with the term "realtime" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain embodiments require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various embodiments, it may be understood that various omissions, substitutions, and changes in the form and details of the devices or processes illustrated may be made without departing from the spirit of the disclosure. As may be recognized, certain embodiments of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Clauses

Examples of the implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1: A computer-implemented method for queuing processing jobs, the computer implemented method comprising, by one or more hardware processors executing program instructions: receiving a processing job associated with a user; scoring the processing job; applying one or more bounds; adding the processing job to a queue; ordering the queue based on scores of processing jobs in the queue; and sampling processing jobs from the queue for dispatch for processing.

Clause 2: The computer-implemented method of Clause 1 further comprising, by the one or more hardware processors executing program instructions: updating the scoring of the processing jobs in the queue; updating application of bounds to processing jobs in the queue; and updating ordering of the processing jobs in the queue.

Clause 3: The computer-implemented method of any of Clauses 1-2 further comprising, by the one or more hardware processors executing program instructions: causing results of processing a processing job to be displayed to the user in a graphical user interface.

Clause 4: The computer-implemented method of any of Clauses 1-3, wherein the scoring is based on at least one of: a size of the processing job, or a number of processing jobs associated with the user and currently running.

Clause 5: The computer-implemented method of any of Clauses 1-4, wherein the queue is ordered such that processing jobs with lower scores are positioned at a top of the queue, and wherein processing jobs with a smaller size and/or associated with a user with fewer processing jobs currently running are scored lower.

Clause 6: The computer-implemented method of any of Clauses 1-5, wherein the one or more bounds comprise at least one of: an upper bound on a number of processing jobs the user can have running at once, or an upper bound on a number of processing jobs the user can have in the queue.

Clause 7: The computer-implemented method of any of Clauses 1-6, wherein sampling processing jobs from the queue comprises: updating scores, updating application of bounds, and updating ordering of the queue; reading a batch of processing jobs from a top of the queue; attempting to dispatch the processing jobs of the batch for processing; removing from the queue any dispatched processing jobs; increasing a batch size of the batch by a constant factor; determining whether a maximum batch size is reached, or all processing jobs in the queue were in the batch; and: in response to determining that the maximum batch size is reached or all processing jobs in the queue were in the batch, resetting the batch size and restarting the sampling; or in response to determining that the maximum batch size is not reached or all processing jobs in the queue were not in the batch, restarting the sampling with the increased batch size.

Clause 8: A system and/or computer system comprising: a computer readable storage medium having program instructions embodied therewith; and one or more processors configured to execute the program instructions to cause the system to perform the computer-implemented method of any of Clauses 1-7.

Clause 9: A computer program product comprising a computer-readable storage medium having program instructions embodied therewith, the program instructions executable by one or more processors to cause the one or more processors to perform the computer-implemented method of any of Clauses 1-7.

Clause 10: A computer-implemented method for queuing processing jobs, the computer implemented method comprising, by one or more hardware processors executing program instructions: receiving a processing job associated with a user for dispatch for processing by one or more compute resources; scoring the processing job based on at least one of: a size of the processing job or a number of processing jobs associated with the user being processed by the one or more compute resources; applying one or more bounds; adding the processing job to a queue if the one or more bounds is or are satisfied, wherein the queue comprises a plurality of processing jobs; ordering the queue based on scores of processing jobs in the queue; and sampling the processing jobs from the queue for dispatch for processing by one or more compute resources.

Clause 11: The computer-implemented method of Clause 10, wherein the sampling of the processing jobs from the queue is based on the queue ordering.

Clause 12: The computer-implemented method of Clause 11, wherein the queue is ordered such that processing jobs with a smaller size and/or associated with a user with fewer processing jobs being processed by the one or more compute resources are positioned at a top of the queue and wherein the sampling of the processing jobs from the queue prioritizes processing jobs from the top of the queue.

Clause 13: The computer-implemented method of Clause 12, wherein processing jobs with a smaller size and/or associated with a user with fewer processing jobs being processed by the one or more compute resources are scored lower, and wherein the queue is ordered such that processing jobs with lower scores are positioned at the top of the queue.

Clause 14: The computer-implemented method of any of Clauses 10-13, further comprising, by the one or more hardware processors executing program instructions: after adding the processing job to the queue and/or dispatching processing jobs from the queue: updating the scoring of the processing jobs in the queue; updating application of bounds to processing jobs in the queue; and updating ordering of the processing jobs in the queue.

Clause 15: The computer-implemented method of any of Clauses 10-14, further comprising, by the one or more hardware processors executing program instructions: causing results of processing a processing job to be displayed to the user in a graphical user interface.

Clause 16: The computer-implemented method of any of Clauses 10-15, wherein the one or more bounds comprise at least one of: an upper bound on a number of processing jobs the user can have being processed by the one or more compute resources at once, or an upper bound on a number of processing jobs the user can have in the queue.

Clause 17: The computer-implemented method of Clause 16, wherein the one or more bounds are adjusted dynamically according to an expected load of the one or more compute resources.

Clause 18: The computer-implemented method of Clause 16 or 17 when dependent on Clause 15, wherein responsive to the one or more bounds not being satisfied because a number of processing jobs in the queue associated with the user meets or exceeds the upper bound on the number of processing jobs the user can have in the queue, the user interface is configured to provide a button or other user interface element, selection of which is effective to remove from the queue one or more processing jobs associated with the user to bring the number below the upper bound.

Clause 19: The computer-implemented method of any of Clauses 10-18, further comprising dispatching processing jobs from the queue for processing by the one or more compute resources and removing from the queue any dispatched processing jobs.

Clause 20: The computer-implemented method of any of Clauses 10-19, further comprising storing information regarding a number of processing jobs being processed by the one or more compute resources and determining not to dispatch a particular number of processing jobs to a particular compute resource that cannot handle said particular number of processing jobs.

Clause 21: The computer-implemented method of any of Clauses 10-20, further comprising storing information regarding the size of the processing jobs being processed by the one or more compute resources and determining not to dispatch one or more processing jobs to a compute resource that cannot handle said one or more processing jobs based on size.

Clause 22: The computer-implemented method of any of Clauses 10-21, wherein sampling processing jobs from the queue comprises: updating scores, updating application of bounds, and updating ordering of the queue; reading a batch of processing jobs from a top of the queue; attempting to dispatch the processing jobs of the batch for processing; removing from the queue any dispatched processing jobs; increasing a batch size of the batch by a constant factor; determining whether a maximum batch size is reached, or all processing jobs in the queue were in the batch; and: in response to determining that the maximum batch size is reached or all processing jobs in the queue were in the batch, resetting the batch size and restarting the sampling; or n response to determining that the maximum batch size is not reached or all processing jobs in the queue were not in the batch, restarting the sampling with the increased batch size.

Clause 23: A computer system comprising: a computer readable storage medium having program instructions embodied therewith; and one or more processors configured to execute the program instructions to cause the computer system to perform the method of any of Clauses 10-22.

Clause 24: A computer program product comprising a computer-readable storage medium having program instructions embodied therewith, the program instructions executable by one or more processors to cause the one or more processors to perform the method of any of Clauses 10-22.

Clause 25: A computer-implemented method for queuing processing jobs, the computer implemented method comprising, by one or more hardware processors executing program instructions: receiving a processing job associated with a user for dispatch for processing by one or more compute resources; applying one or more bounds; adding the processing job to a queue if the one or more bounds is or are satisfied, wherein the queue comprises a plurality of processing jobs; ordering the queue based on at least one of: (i) a size of the processing job or (ii) a number of processing jobs associated with the user being processed by the one or more compute resources scores of processing jobs in the queue; and sampling the processing jobs from the queue for dispatch for processing by one or more compute resources.

## Claims

1. A computer-implemented method for queuing processing jobs, the computer-implemented method comprising, by one or more hardware processors executing program instructions:
receiving a processing job associated with a user for dispatch for processing by one or more compute resources;
scoring the processing job based on at least one of: a size of the processing job or a number of processing jobs associated with the user being processed by the one or more compute resources;
applying one or more bounds;
adding the processing job to a queue if the one or more bounds is or are satisfied, wherein the queue comprises a plurality of processing jobs;
ordering the queue based on scores of processing jobs in the queue; and
sampling the processing jobs from the queue for dispatch for processing by one or more compute resources.

2. The computer-implemented method of Claim 1, wherein the sampling of the processing jobs from the queue is based on the queue ordering.

3. The computer-implemented method of Claim 2, wherein the queue is ordered such that processing jobs with a smaller size and/or associated with a user with fewer processing jobs being processed by the one or more compute resources are positioned at a top of the queue and wherein the sampling of the processing jobs from the queue prioritizes processing jobs from the top of the queue.

4. The computer-implemented method of Claim 3, wherein processing jobs with a smaller size and/or associated with a user with fewer processing jobs being processed by the one or more compute resources are scored lower, and wherein the queue is ordered such that processing jobs with lower scores are positioned at the top of the queue.

5. The computer-implemented method of any preceding Claim, further comprising, by the one or more hardware processors executing program instructions:
after adding the processing job to the queue and/or dispatching processing jobs from the queue:
updating the scoring of the processing jobs in the queue;
updating application of bounds to processing jobs in the queue; and
updating ordering of the processing jobs in the queue.

6. The computer-implemented method of any preceding Claim, further comprising, by the one or more hardware processors executing program instructions:
causing results of processing a processing job to be displayed to the user in a graphical user interface.

7. The computer-implemented method of any preceding Claim, wherein the one or more bounds comprise at least one of: an upper bound on a number of processing jobs the user can have being processed by the one or more compute resources at once, or an upper bound on a number of processing jobs the user can have in the queue.

8. The computer-implemented method of Claim 7, wherein the one or more bounds are adjusted dynamically according to an expected load of the one or more compute resources.

9. The computer-implemented method of 7 or claim 8 when dependent on claim 6, wherein responsive to the one or more bounds not being satisfied because a number of processing jobs in the queue associated with the user meets or exceeds the upper bound on the number of processing jobs the user can have in the queue, the user interface is configured to provide a button or other user interface element, selection of which is effective to remove from the queue one or more processing jobs associated with the user to bring the number below the upper bound.

10. The computer-implemented method of any preceding Claim, further comprising dispatching processing jobs from the queue for processing by the one or more compute resources and removing from the queue any dispatched processing jobs.

11. The computer-implemented method of any preceding Claim, further comprising storing information regarding a number of processing jobs being processed by the one or more compute resources and determining not to dispatch a particular number of processing jobs to a particular compute resource that cannot handle said particular number of processing jobs.

12. The computer-implemented method of any preceding Claim, further comprising storing information regarding the size of the processing jobs being processed by the one or more compute resources and determining not to dispatch one or more processing jobs to a compute resource that cannot handle said one or more processing jobs based on size.

13. The computer-implemented method of any preceding Claim, wherein sampling processing jobs from the queue comprises:
updating scores, updating application of bounds, and updating ordering of the queue;
reading a batch of processing jobs from a top of the queue;
attempting to dispatch the processing jobs of the batch for processing;
removing from the queue any dispatched processing jobs;
increasing a batch size of the batch by a constant factor;
determining whether a maximum batch size is reached, or all processing jobs in the queue were in the batch; and:
in response to determining that the maximum batch size is reached or all processing jobs in the queue were in the batch, resetting the batch size and restarting the sampling; or
in response to determining that the maximum batch size is not reached or all processing jobs in the queue were not in the batch, restarting the sampling with the increased batch size.

14. A computer system comprising:
a computer readable storage medium having program instructions embodied therewith; and
one or more processors configured to execute the program instructions to cause the computer system to perform the method of any preceding Claim.

15. A computer program product comprising a computer-readable storage medium having program instructions embodied therewith, the program instructions executable by one or more processors to cause the one or more processors to perform the method of any preceding Claim.
